Europäisches Patentamt

European Patent Office

Office européen des brevets

(19)

(11) Numéro de publication : **0 382 623 B1**

(12) ## FASCICULE DE BREVET EUROPEEN

(45) Date de publication du fascicule du brevet :
26.07.95 Bulletin 95/30

(51) Int. Cl.⁶ : **H01B 1/12,** H01M 6/18,
C09K 9/02, G02F 1/17

(21) Numéro de dépôt : **90400315.9**

(22) Date de dépôt : **06.02.90**

(54) **Matériau colloide conducteur de cations alcalins et applications à titre d'électrolytes.**

(30) Priorité : **09.02.89 FR 8901666**

(43) Date de publication de la demande :
**16.08.90 Bulletin 90/33**

(45) Mention de la délivrance du brevet :
**26.07.95 Bulletin 95/30**

(84) Etats contractants désignés :
**AT BE CH DE ES FR GB IT LI LU SE**

(56) Documents cités :
**DE-A- 3 736 342
FR-A- 2 369 585
US-A- 4 573 768
DATABASE DERWENT WORLD PATENT
INDEX, AN-78-42797A (24); & JP-A-53 048 986
(MATSUSHITA ELEC. IND. K.K.) 02-05-1978**

(73) Titulaire : **SAINT-GOBAIN VITRAGE
"Les Miroirs",
18 Avenue d'Alsace
F-92400 Courbevoie (FR)**

(72) Inventeur : **Desbat, Bernard
76 Ter, avenue Nancel Pélard
F-33600 Pessac (FR)**
Inventeur : **Lassegues, Jean-Claude
4, Rue Jacques Prévert
F-33600 Pessac (FR)**

(74) Mandataire : **Menes, Catherine et al
SAINT-GOBAIN RECHERCHE 39, Quai Lucien
Lefranc
F-93300 Aubervilliers (FR)**

EP 0 382 623 B1

## Description

**MATERIAU COLLOIDE CONDUCTEUR DE CATIONS ALCALINS ET APPLICATIONS A TITRE D'ELECTROLYTES**

L'invention concerne de nouveaux matériaux à conductivité ionique susceptibles d'être utilisés comme électrolytes notamment dans des systèmes électrochromes.

Plus précisément, l'invention a pour objet des matériaux colloïdes conducteurs de cations alcalins, un mode de préparation de ces matériaux ainsi que l'application de tels matériaux en tant qu'électrolytes dans des vitrages dits électrochromes, c'est-à-dire dont la transmission lumineuse est modifiée sous l'action d'une différence de potentiel électrique.

La combinaison d'une polybase au sens de BRÖNSTED, c'est-à-dire d'un polymère présentant des centres accepteurs de protons avec un sel inorganique MX en l'absence de solvant a été très étudiée en vertu de ses propriétés de conduction ionique. Ainsi, il est connu par exemple du brevet EP-A-13 199 des matériaux macromoléculaires à conduction ionique constitués par une solution solide d'un sel de métal alcalin dissous au sein d'un polymère basique comportant des hétéroatomes choisis parmi l'oxygène, l'azote, le soufre et le phosphore. Les meilleures performances de conductivité ont été obtenues avec un complexe polyoxyéthylène - sel de lithium, toutefois ces matériaux ne donnent pas satisfaction sur de nombreux points auxquels différents travaux ont tenté de porter remède sans aboutir toutefois à des résultats parfaitement satisfaisants.

Tout d'abord, on sait que le phénomène de conduction se produit pratiquement exclusivement avec un polymère en phase amorphe élastomère, lorsque les ions et les segments du polymère sont facilement mobiles ; or, les homopolymères du type polyéther ou polyimine ont tendance à cristalliser très facilement. Pour l'éviter, il a été proposé par exemple dans le brevet EP-A-119 912 des matériaux macromoléculaires constitués par des copolymères de l'oxyde d'éthylène et d'un deuxième motif du type étheroxyde cyclique. On obtient des polymères dont la tendance à la cristallisation est considérablement réduite par rapport aux homopolymères à chaînes linéaires, mais en revanche l'énergie de solvatation du sel par le polymère est diminuée en raison de la diminution du nombre de centres basiques portés par le polymère susceptibles de dissocier le sel et par voie de conséquence la conductivité ionique.

Si la cristallisation doit être évitée, il en est de même de la vitrification du polymère, aussi le deuxième critère de sélection est celui d'une température de transition vitreuse aussi basse que possible afin de préserver les propriétés de viscoélasticité qui conviennent pour les mouvements des différentes chaînes présentes et qui sont par ailleurs favorables à une bonne mise en oeuvre du matériau qui doit pouvoir être utilisé en couches minces ce qui implique généralement une flexibilité suffisante. Pour accroître cette flexibilité, on peut "porter" le matériau à une température plus élevée, mais si des températures d'utilisation voisines de 80-100° C sont admissibles pour des applications telles les générateurs électrochimiques, il n'en est pas de même pour des applications du type vitrages électrochromes qui doivent pouvoir fonctionner à température ambiante et même à des températures inférieures à -10° C par exemple.

Enfin, l'analyse du mécanisme de conduction a montré que le nombre de transport anionique est souvent équivalent au nombre de transport cationique, même avec des anions du type $ClO_4^-$, $SCN^-$, $CF_3SO_3^-$ dont le volume est pourtant beaucoup plus grand que celui des cations $Li^+$, $Na^+$ ou $K^+$ ; or la conduction du cation joue un rôle privilégié dans divers mécanismes tels l'électrochromisme. Dans le brevet EP-A-213 985, il a été proposé des sels dont l'anion se présente sous la forme d'une chaîne polyéther dont l'extrémité porte une fonction anionique, la longueur de la chaîne limitant la mobilité de l'anion. Dans le même esprit, il a été également proposé de greffer les anions sur la chaîne polymérique ou de les associer à cette chaîne par des liaisons hydrogène.

De façon générale, les conductivités ioniques obtenues à température ambiantes sont relativement faibles, par exemple inférieures à $10^{-5}\Omega^{-1}cm^{-1}$, ce qui interdit nombre d'utilisations pratiques.

De plus et de façon systématique, la présence d'eau doit être évitée dans ces mélanges : la conduction par les protons et les hydroxyles a pu être jugée parfois plus importante que la conduction par le cation métallique. De plus, la présence d'eau est fortement dommageable à la stabilité électrochimique de l'électrolyte (il faut en effet opérer dans une plage étroite sous peine de formation d'hydrogène gazeux avec apparition de petites bulles). Par ailleurs, l'eau entraîne généralement un vieillissement accéléré ou une dissolution des couches minces de matériaux en contact avec l'électrolyte.

Il a été également étudié des matériaux conducteurs de métaux alcalins obtenus par mélange d'un ionomère (i) obtenu par neutralisation d'un polyacide au sens de BRÖNSTED par un hydroxyde de métal alcalin MOH, et d'un solvant polaire (ii) capable de dissoudre ou au moins de plastifier l'ionomère (i).

Il a été récemment montré que des ionomères, tels que le poly(styrène sulfonate) de sodium devenaient des polyélectrolytes conducteurs du seul ion sodium lorsqu'ils étaient plastifiés par du poly(éthylénéglycol) (PEG) de faible masse molaire (L.C. HARDY et D.F. SHRIVER, Journal of American Chemical Society, 1985, 107, 3823). Néanmoins la valeur de la conductivité à température ambiante reste inférieure à $10^{-6}\Omega^{-1}cm^{-1}$.

Le brevet FR.2 597 491 décrit un procédé de fabrication de colloïdes d'ionomères perfluorés par dissolution dans un solvant polaire adéquat de sels de NAFION (polymère fluoré porteur de groupements échangeurs d'ions $-SO_3M$ ; marque déposée de la Société DU PONT de NEMOURS) ; $M^+$ étant un cation métallique ou une entité cationique plus complexe. La conductivité ionique de tels colloïdes (sols ou gels) peut atteindre 5 $10^{-3}\Omega^{-1}cm^{-1}$ à température ambiante. Toutefois, les produits utilisés sont d'un prix de revient élevé qui limite l'usage d'un tel matériau.

Enfin, de nombreux travaux ont porté sur des matériaux obtenus par combinaison d'un ionomère (i) tel que défini précédemment et d'une polybase (iii) d'un polymère au sens de BRÖNSTED, c'est-à-dire présentant des centres accepteurs de protons. L'association par liaison hydrogène entre fonctions acides du premier polymère et fonctions basiques du second, peut conduire en effet à la formation d'un complexe intermoléculaire, les polymères étant mis dans un solvant commun pour le mélange. Il est connu par exemple que l'addition de solutions aqueuses d'un polyéther du type polyoxyéthylène et d'acide polyacrylique conduit à un précipité présentant un caractère amorphe et d'aspect caoutchouteux dont la température de transition vitreuse est intermédiaire entre celle du polyoxyéthylène et celle de l'acide polyacrylique. Dans le complexe formé, les deux polymères sont très fortement imbriqués en raison du très grand nombre de ponts hydrogène qui s'établissent. Ainsi de nombreux complexes polymères donneurs de protons-polymères accepteurs de protons sont de façon générale susceptibles d'être obtenus à condition que les forces d'interaction entre eux soient supérieures à la somme des énergies de solvatation dans les solutions initiales.

Par contre, il en est autrement si préalablement au mélange des polymères un certain nombre des fonctions acides sont neutralisées par une base telle un hydroxyde de lithium, de sodium ou de potassium. La complexation entre les deux polymères ne peut plus s'effectuer que par l'intermédiaire des fonctions acides non neutralisées et de plus avec des longueurs de corrélation plus faibles dans la mesure où des interactions répulsives apparaissent entre les groupes $-COO^-$ ionisés et les oxygènes du polyéther. Cette neutralisation partielle permet donc d'introduire les cations souhaités au sein du matériau macromoléculaire, lui conférant ainsi le caractère de conducteur ionique et de plus l'écartement des chaînes dû à ces interactions répulsives entraîne une expansion des polymères qui se présentent maintenant sous forme d'un gel facilement applicable en couches minces.

Au-delà d'un certain taux limite de neutralisation $\alpha_m$, le complexe ne se forme plus et il apparaît une séparation des différentes phases - sauf à utiliser des quantités de solvants incompatibles avec les utilisations envisagées - comme il a été montré dans l'article de M. TSUCHIDA and al, Solid State Ionics 116 (1983) 227-233. Par neutralisation partielle, on doit donc entendre un taux de neutralisation $\alpha$ tel que $0 < \alpha < \alpha_m$.

Une conduction suffisante n'est possible qu'en présence d'un solvant basique qui permet de soustraire les cations alcalins à l'influence des groupes $-COO^-$ du polymère acide. En l'absence d'un tel solvant basique, les paires d'ions sont en effet si fortement associées que le cation n'est pratiquement plus mobile ce qui donne un matériau assez mauvais conducteur ionique.

Lorsque de l'eau est utilisée comme solvant basique, on obtient une conductivité ionique très élevée, par exemple de l'ordre de $10^{-3}$ Ohms$^{-1}$ cm$^{-1}$ à 20° C, soit de 100 à 1000 fois supérieure à celle des matériaux macromoléculaires à conductivité ionique connue. Toutefois, cette conductivité élevée est probablement pour partie due à la dissociation de l'eau provenant du solvant et aux protons du polymère acide. D'autre part nous avons indiqué précédemment que la présence d'eau n'est pas toujours souhaitable dans les dispositifs électrochimiques, notamment les dispositifs qui utilisent des électrodes réversibles au contact d'une solution aqueuse tels les dispositifs dans la composition desquels entrent des matériaux électrochromes.

Dans ces cas, il est préférable d'utiliser comme solvant basique un solvant organique polaire, choisi par ailleurs en fonction de la nature des polymères acide et basique, (le solvant basique doit en effet ne pas donner lieu à une démixtion du mélange de polymères), de l'acidité du polymère acide, du taux $\alpha$ de neutralisation et de la nature cation $M^+$, sachant par exemple que l'interaction des groupes $COO^-$ avec $M^+$ diminue dans la série $Li^+$, $Na^+$, $K^+$ et de ses domaines de stabilité thermique et électrochimique encore que sur ces derniers points la plupart des solvants organiques polaires présentent des propriétés supéreures à celles de l'eau.

Les auteurs de la présente invention se sont donc efforcés de fournir de nouveaux matériaux à conductivité ionique, faciles à préparer, de faible prix de revient, présentant des propriétés filmogènes et dont la conduction ionique soit suffisante notamment pour leur utilisation dans des systèmes électrochromes.

Les matériaux à conductivité ionique concernés par l'invention sont des matériaux colloïdes conducteurs de cations alcalins constitués par un mélange dans des proportions adéquates d'un ionomère (i) obtenu par neutralisation d'un polyacide au sens de BRÖNSTED par un hydroxyde de métal alcalin MOH le taux de neutralisation a étant tel que $0 < \alpha < \alpha_m$, ledit ionomère (i) portant des groupes anioniques fixés à la chaîne polymérique associés à des cations alcalins $M^+$ et d'un solvant polaire (ii), capable de solubiliser ou de plastifier l'ionomère (i) et d'assurer une dissociation partielle des ions et paires d'ions et le transport des ions $M^+$.

L'invention a ainsi pour objet un matériau colloïde conducteur de cations lithium $Li^+$ (ainsi que son procédé d'obtention), matériau comprenant le mélange d'un ionomère (i) susceptible d'être obtenu par neutralisation d'un polyacide au sens de Brönsted par un hydroxyde de lithium $LiOH$ afin de porter des groupes anioniques fixés à la chaîne polymérique associés à des cations alcalins $Li^+$ et d'un solvant polaire (ii) capable de solubiliser ou plastifier l'ionomère (i) et d'assurer une dissociation partielle des ions et paires d'ions et le transport de cations $Li^+$. Ledit matériau se caractérise en ce que le polyacide est un acide polycarboxylique choisi parmi l'acide polyacrylique PAA, l'acide polyméthylacrylique PMMA et leurs copolymères avec des motifs amines ou amides, en ce que le polyacide n'est neutralisé que partiellement avec un taux de neutralisation $\alpha$ inférieur au taux de neutralisation $\alpha_m$ au-delà duquel il se produit une séparation de phase et étant compris entre 10 et 20 %. Il comporte également une polybase (iii) au sens de Brönsted. Cette polybase est soluble dans le solvant (ii), ne donne pas de précipité solide avec l'ionomère (i), contribue à la dissociation des ions et paires d'ions en solvatant les ions $Li^+$ et est choisie parmi le groupe suivant : polyéthers par exemple poyoxyéthylène PEO, polyamides par exemple polyvinylpyrrolidone PVP, polyacrylamides, polyimides par exemple polyéthylènimide PEI, polyéthylèneglycols PEG de masse supérieure à 1000 et inférieure à 10 000.

Les polyacides convenant pour les ionomères (i) sont donc des polymères acides dont les groupes acides du type -COOH peuvent être facilement neutralisés par un hydroxyde de métal alcalin comme LiOH, à l'exclusion des composés du type NAFION.

Le solvant polaire (ii) assure la dissociation partielle des paires $-COO^- M^+$ et le transport des ions $M^+$. En effet, l'ionomère (i) "sec" ne présente qu'une très faible conductivité, par exemple inférieure à $10^{-9}\Omega^{-1}cm^{-1}$. Notons que de façon générale, dans la série des alcalins, l'interaction entre l'anion et $M^+$ augmente lorsque l'on passe de $Cs^+$ à $K^+$, $Na^+$ et $Li^+$

La nature du solvant polaire (ii) dépend de la nature du polyacide, de son taux de neutralisation et dans une moindre mesure de la nature de M. De façon générale, le solvant pourra être choisi avantageusement dans la liste des solvants ou mélanges de solvants couramment utilisés dans les générateurs électrochimiques. Ce sont par exemple des solvants dipolaires aprotiques appartenant à la famille des amides, non susbtitués, N-monosubstitués ou N-N-disubstitués. Citons parmi les plus usuels, le formamide, l'acétamide, le N-méthylformamide (NMF), le N-méthylacétamide (NMA), le N-N-diméthylformamide (DMF), le N-N-diméthylacétamide (DMA), etc....

D'autres solvants dipolaires aprotiques de constante diélectrique relativement élevée sont l'acétronitrile (AN), le diméthylsulfoxyde (DMSO), le carbonate de propylène (CP), le carbonate d'éthylène glycol (CEG), l'hexaméthylphosphoramide (HMPA), l'hexaméthylphosphotria-mide (HMPT) et les pyrrolidones.

Enfin, dans la famille des solvants polaires à caractère donneur de proton, citons les alcools et les polyalcools. Parmi ces derniers, l'éthylène glycol (EG), le propylène glycol, le diéthylène glycol et le glycérol.

D'un intérêt plus particulièrement avantageux sont les polyéthylèneglycols $H(OCH_2CH_2)_nOH$ (PEG) dont la masse est faible, par exemple entre 200 et 1000 et qui sont des liquides près de la température ambiante (la température de fusion du PEG de masse 1000 est de l'ordre de 37°C) et dont le rôle de plastifiant est en effet bien connu.

Le matériau à conductivité ionique selon l'invention comporte donc un troisième constituant (iii) formé par une polybase au sens de BRÖNSTED, c'est-à-dire présentant des centres accepteurs de protons, soluble dans le solvant (ii) et ne donnant pas de précipité solide avec l'ionomère (i). Le rôle de la polybase (iii) est d'une part d'augmenter la viscosité du milieu et donc de faciliter l'élaboration de l'électrolyte en couche mince dans un dispositif électrochimique, et d'autre part de contribuer à la dissociation de la paire d'ions en solvatant le cation $Li^+$ comme cela se produit dans les complexes du type polyéther-sels de lithium précédemment décrits.

Il est essentiel que l'addition de cette polybase (iii) au mélange ionomère (i)/solvant (ii) ne produise ni précipitation due à la formation d'un complexe de polymères entre (i) et (iii), ni séparation en deux phases liquides de concentration différente en espèces dissoutes. Les trois constituants (i), (ii) et (iii) sont donc choisis de façon à donner une phase homogène de type sol ou gel.

Comme déjà mentionné, on utilise à titre de polybase (iii), des polyéthers - par exemple le polyoxyéthylène (POE) - des polyamides - par exemple le polyvinylpyrolidone (PVP), les polyacrylamides - ou des polyimines - par exemple le polyéthylènimine (PEI).

On inclue également dans cette famille des polybases (iii), les polyéthylèneglycols (PEG), dont la masse est supérieure à 1000 et inférieure à 10 000, qui comportent un nombre très prédominant de fonctions "éther" par rapport aux fonctions "alcool" terminales et qui sont solides à température ambiante ; des PEG de masse comprise entre 200 et 10 000 étant avantageusement disponibles commercialement en un grand nombre de spécimens.

La matériau conducteur ionique selon l'invention peut enfin contenir un quatrième constituant à savoir un sel inorganique MX (iv), soluble dans le solvant (ii) ou $M^+$ est le même cation alcalin que celui utilisé lors de la neutralisation du polyacide (i) et où X un anion monovalent tel un halogénure, $ClO_4$, $BF_4$ et $CF_3SO_3$.

Il a été en effet observé que l'addition d'un sel inorganique (iv) au mélange ternaire (i), (ii), (iii) pouvait modifier favorablement la viscosité du milieu et augmenter la conductivité de façon appréciable.

Bien entendu, un des avantages de la solution ternaire qui est de présenter une conduction essentiellement cationique est alors perdu, car l'augmentation de conductivité dans le mélange quaternaire est alors due pour partie au transport de l'anion $X^-$. Cependant, il peut rester intéressant dans certaines applications d'augmenter la conductivité cationique dans la mesure où le transport de l'anion ne provoque pas aux électrodes de réactions parasites indésirables.

Divers matériaux colloïdes à conductivité ionique conformes à l'invention ont été préparés en respectant le protocole suivant :

## PREPARATION OU SELECTION DES CONSTITUANTS

### (i) - IONOMERES

Certains ionomères sont commercialement disponibles. Par exemple, le poly (sodium 4-styrènesulfonate) de formule $[CH_2CH(C_6H_4SO_3Na)]_n$, le sel de sodium de l'acide poly (vinylsulfonique) de formule $[CH_2CH(SO_3Na)]_n$, etc... Plus généralement, ce sont cependant les formes polyacides qui sont commercialement disponibles. Il devra alors être procédé à la neutralisation d'un certain pourcentage $\alpha$ des groupes acides portés par le polymère, $\alpha$ étant compris par exemple entre 1 % et 100 %, c'est-à-dire 0,01 et 1. Cette neutralisation est effectuée avec des solutions aqueuses titrées de LiOH, NaOH ou KOH, ajoutées en quantité connue à une solution aqueuse du polyacide.

**EXEMPLE** : Partant d'une solution aqueuse commerciale de PAA à 37 % (Aldrich MW170 000) et de monohydrate d'hydroxyde de lithium $LiOH,H_2O$ (Aldrich 99,9 %) :

. On pèse 20 g de la solution aqueuse de PAA, ce qui correspond à 20 x 37/100 x 1/72 = 0,1028 motif -$CH_2CH(COOH)$-

. On dissoud 2,098 g de $LiOH,H_2O$ dans de l'eau distillée et on ajuste le volume de la solution à 100 ml. La solution obtenue est en principe 0,5 M en LiOH. Cependant sa molarité exacte est vérifiée par titration avec HCl 0,5N pour tenir compte d'une évolution éventuelle du produit commercial de départ par hydratation et carbonatation.

0,01028 x 1000/ 0,5 = 20,56 ml de la solution 0,5M LiOH sont ajoutés aux 20 g de solution aqueuse de PAA à 37 %.

. Le mélange est brassé avec un agitateur magnétique dans un bécher pendant environ 1 heure pour une homogénéisation complète.

. On obtient alors une solution aqueuse de PAA neutralisé à 10 % par LiOH, c'est-à-dire que 10 % des groupes acides -COOH ont été remplacés par des paires d'ions -$COO^-Li^+$. Ce taux de neutralisation peut évidemment être ajusté à n'importe quelle valeur comprise entre 0 et 100 % en redéfinissant le volume de la solution LiOH 0,5 **M** à ajouter initialement.

A ce stade, il peut être avantageux d'évaporer l'eau pour obtenir l'ionomère sec. Ceci est effectué en chauffant le mélange vers 60°C sous vide primaire pendant plusieurs heures jusqu'à obtention d'une masse solide blanchâtre qui peut être réduite à l'état de poudre sous air sec ou sous azote sec dans une boîte à gants. La poudre d'ionomère est ensuite dispersée dans 200 ml de méthanol anhydre et le mélange est soumis à agitation en chauffant légèrement, par exemple à 50°C jusqu'à dissolution complète. A la fin de l'opération, le volume de la solution est complété à 200 ml dans une fiole jaugée et on dispose alors, dans le cas de l'exemple cité ci-dessus d'une solution méthanolique de PAA où 10 % de protons acides ont été remplacés par $Li^+$ et qui contient 0,1029 motifs élémentaires dans 200 ml soit 0,514 motifs/litre.

L'étape de redissolution de la poudre d'ionomère dans le méthanol est relativement longue et il peut être avantageux de faire appel à une méthode de neutralisation décrite dans la littérature et notamment dans un article publié par N.T.N. KLOOSTER, S. VAN DER TOUW & N. MANDEL - Macromolecules - 1984 - volume 17 - pages 2070 - 2093 où l'on utilise les méthanolates de lithium $LiOCH_3$ ou de sodium $NaOCH_3$ produits respectivement par action du lithium ou du sodium sur le méthanol. Les acides polycarboxyliques tels que PAA ou PMAA étant solubles dans le méthanol, on dispose d'une méthode qui permet d'obtenir directement des solutions méthanoliques d'ionomère en évitant complètement l'eau.

L'intérêt d'une solution méthanolique des ionomères (i) est que le méthanol est un solvant volatil qui pourra être facilement évaporé par la suite au profit d'un solvant polaire peu volatil. Il pourra aussi être intéressant de mélanger la solution méthanolique de l'ionomère (i) avec une solution de la polybase (iii) dans un solvant polaire (ii).

### (ii) - SOLVANTS

Nous avons utilisé des solvants du commerce de haute pureté. Par exemple, le méthanol, le diméthylsulfonide, etc... étaient de qualité "spectrophotométrique" (Aldrich 99,9 %). Nous n'avons pas effectué de purification supplémentaire mais simplement observé les précautions usuelles pour garder ces solvants anhydres. Le choix du solvant est guidé en premier lieu par son aptitude à solubiliser les autres constituants. Nous nous sommes référés à des ouvrages tels que "Encyclopedia of Polymer Science and Technology, Ed. board H.F. MARK, N.G. GAYLORD and N.M. BIKALES, Interscience Publishers".

### (iii) - POLYMERES BASIQUES

Des solutions mères des polymères basiques dans les solvants polaires anhydres (ii) ont également été préparées. Leur concentration, lorsque la solubilité dans le solvant le permet, a été ajustée autour de 0,5 motif/litre.

### (iv) - SELS INORGANIQUES MX

Les sels de Li, (halogénures, chlorates, triflates, etc...) sont également mis en solution au préalable dans un solvant polaire (ii) ou éventuellement dans le méthanol.

### II - PREPARATION ET CARACTERISATION DE MELANGES

### 1 - SOLUBILISATION OU PLASTIFICATION D'UN IONOMERE (i)/(ii)

Les polyélectrolytes obtenus par solubilisation d'un ionomère dans l'eau et dans le méthanol ont été très étudiés dans la littérature.

Dans le cas du système PAA, $\alpha Li^+$/méthanol ou $\alpha Li^+$ représente le degré de neutralisation par LiOH, nous avons mesuré la conductivité de solutions relativement concentrées en polymère.

### EXEMPLE 1 :

La solution méthanolique de PAA($O,1 Li^+$) à 0,514 motif/litre a été chauffée sous vide primaire à environ 50°C de façon à la dégazer et à éliminer une partie du méthanol. On a obtenu une solution à 0,72 motif/litre après environ 1 heure de ce traitement. La conductivité ionique de cette solution est de $8\ 10^{-4}\Omega^{-1}cm^{-1}$ à 300 K. Avec des solvants plus polaires, moins volatils que le méthanol, cette propriété de polyélectrolyte est conservée.

### EXEMPLE 2 :

A 20 ml d'une solution méthanolique de PAA,$O,1Li^+$ de concentration 0,514 motif/litre sont ajoutés 0,462 g de PEG (Aldrich) de masse 1000. Le mélange est soumis à agitation jusqu'à homogénéisation complète, c'est-à-dire pendant environ 30 minutes. Ensuite on procède à une évaporation du méthanol sous vide primaire en chauffant le mélange vers 60°C.

Le produit final est un élastomère transparent de forte viscosité, mais à partir duquel il est possible d'effectuer un prélèvement pour une mesure de conductivité.

La concentration finale de PAA,$0,1Li^+$ dans le PEG de masse 1000 est de l'ordre de 9,45 motifs/litre, c'est-à-dire qu'il y a pratiquement le même nombre de groupes carboxyliques ou carboxylates que de groupes -$OCH_2CH_2$-.

Les mesures de conductivité de ce matériau, en fonction de la température et après un desséchage supplémentaire de 24 heures sous vide à 80°C "in situ", donnent les résultats suivants :

| t°C | 80 | 60 | 20 |
|---|---|---|---|
| $\sigma(\Omega^{-1}cm^{-1})$ | $6,9\ 10^{-5}$ | $2,5\ 10^{-5}$ | $1,7\ 10^{-6}$ |

## EXEMPLE :

A 20 ml d'une solution méthanolique de PAA ; $0,2Li^+$ de concentration 0,514 motif/litre sont ajoutés 5 ml de DMSO. Après homogénéisation, le mélange est chauffé sous vide primaire à 80°C pendant 12 heures environ pour éliminer le méthanol et une partie du DMSO. On obtient une première solution de $PAA,0,2Li^+$ dans le DMSO à 18 % en poids de polymère, c'est-à-dire de concentration 2,4 motifs/litre. Des évaporations ultérieures sur une partie de cette solution produisent des solutions plus concentrées et dont la viscosité est de mieux en mieux adaptée à la fabrication de couches minces.

Les concentrations C de ces solutions et leur conductivités $\sigma$ à 300 K sont reportées dans le tableau suivant :

| C (motifs/litre) | 2,4 | 3,5 | 6,8 |
|---|---|---|---|
| $\sigma(\Omega^{-1}cm^{-1})$ | $4\ 10^{-4}$ | $9,6\ 10^{-5}$ | $5,5\ 10^{-5}$ |

Le même protocole appliqué à une solution PAA, $O.1Li^+$ dans le DMSO a donné les résultats suivants : la première solution, plus diluée que précédemment était de 0,8 motif/litre. Sa conductivité à 300 K $\sigma=4,4$ $10^{-4}\Omega^{-1}cm^{-1}$. Après évaporation jusque vers des concentrations de l'ordre de 5 motifs/litre : $\sigma=3$ $10^{-5}\Omega^{-1}cm^{-1}$.

Notons que dans les exemples précédents, le point de départ a toujours été une solution méthanolique de l'ionomère. Ceci est indispensable avec les solvants très visqueux tels que le PEG 1000, mais avec un solvant tel que le DMSO on peut éviter le passage par la solution méthanolique en dissolvant directement l'ionomère sec et anhydre $PAA,\alpha Li^+$ dans le DMSO.

Signalons cependant qu'avec certains solvants polaires tels que le sulfolane et le propylène de carbonate, l'ionomère $PAA,\alpha Li^+$ donne lieu à un précipité solide. Le sulfolane et le propylène de carbonate sont donc des exemples de solvants polaires à exclure dans ce cas.

## 2 - MELANGE TERNAIRE IONOMERE/POLYBASE/SOLVANT

Le nombre de combinaisons possibles pour conserver une solution colloïdale homogène est encore plus restreint lorsque l'on ajoute une polybase. Il faut en effet éviter les démixtions ou les précipités.

## EXEMPLE :

A 20 ml d'une solution de polyvinylpyrrolidone (PVP, Aldrich MW40 000) de concentration 0,5 motif/litre dans le DMSO sont ajoutés 0,73 g de PAA, $0,15Li^+$ sous forme de poudre anhydre.

Après agitation pendant plusieurs heures, on obtient une solution homogène dans laquelle il y a à peu près le même nombre de motifs des deux polymères. Cette solution est ensuite chauffée vers 70°C sous vide primaire pendant plusieurs heures afin de la dégazer et d'éliminer une partie du DMSO. Lorsqu'elle est rendue à un état colloïdal qui se prête à la fabrication de couches minces, sa conductivité à 300 K est de $8\ 10^{-5}\Omega^{-1}cm^{-1}$.

## III - APPLICATIONS

Les matériaux colloïdes selon l'invention se prêtent très facilement à une mise en oeuvre sous forme de couches minces et trouvent en raison de leur conductivité ionique élevée une application dans divers dispositifs électrochimiques, tels que des générateurs. Une application plus particulièrement intéressante notamment en raison de l'absence totale d'eau est leur application comme couche électrolytique d'une cellule électrochrome, notamment d'un vitrage électrochrome constitué par exemple de l'empilement suivant : verre/électrode transparente $(In_2O_3)$/matériau électrochrome $(WO_3)$/matériau colloïde selon l'invention/contre-électrode/électrode transparente $(In_2O_3)$/verre. Un tel vitrage peut être réalisé, en choisissant comme électrolyte un système PAA-O,2 Li$^+$ avec 2,4 motifs par litre et comme contre-électrode une couche d'oxyde de nickel suivant les enseignements de la demande de brevet EP 373020 au nom de la demanderesse.

## Revendications

**Revendications pour les Etats contractants suivants : AT, BE, CH, DE, FR, GB, IT, LI, LU, SE**

1.  Matériau colloïde conducteur de cations lithium Li$^+$ comprenant le mélange d'un ionomère (i) susceptible d'être obtenu par neutralisation d'un polyacide au sens de Brönsted par un hydroxyde de lithium LiOH afin de porter des groupes anioniques fixés à la chaine polymérique associés à des cations alcalins Li$^+$ et d'un solvant polaire (ii) capable de solubiliser ou plastifier l'ionomère (i) et d'assurer une dissociation partielle des ions et paires d'ions et le transport de cations Li$^+$, **caractérisé en ce que** le polyacide est un acide polycarboxylique choisi parmi l'acide polyacrylique PAA, l'acide polyméthylacrylique PMMA et leurs copolymères avec des motifs amines ou amides, **en ce que** le polyacide n'est neutralisé que partiellement avec un taux de neutralisation $\alpha$ inférieur au taux de neutralisation $\alpha_m$ au-delà duquel il se produit une séparation de phase et était compris entre 10 et 20% et **en ce qu'**il comporte également une polybase (iii) au sens de Brönsted, soluble dans le solvant (ii), ne donnant pas de précipité solide avec l'ionomère (i), contribuant à la dissociation des ions et paires d'ions en solvatant les ions Li$^+$ et choisie parmi le groupe suivant : polyethers (par exemple polyoxyéthylène PEO, polyamides par exemple polyvinylpyrrolidone PVP, polyacrylamides, polyimides par exemple polyéthylènimide PEI, polyéthylèneglycols PEG de masse supérieure à 1000 et inférieure à 10 000.

2.  Matériau colloïde conducteur de cations Li$^+$ selon la revendication 1, **caractérisé en ce que** le solvant polaire (ii) est formé d'un ou d'une combinaison de solvants dipolaires aprotiques suivants : formamide, acétamide, N-méthylformamide (NMF), N-méthylacétamide (NMA), N-N-diméthylformamide (DMF), N-N-diméthylacétamide (DMA), acétonitrile, diméthylsulfoxide (DMSO), sulfolane, carbonate de propylène (CP), carbonate d'éthylène glycol (CEG), héxaméthylphosphoramide (HMPA), héxaméthylphosphotriamide (HMPT), pyrrolidone.

3.  Matériau colloïde conducteur de cations Li$^+$ selon la revendication 1, **caractérisé en ce que** le solvant polaire (ii) est un solvant polaire donneur de protons choisi parmi le groupe suivant : éthylèneglycol (EG), propylène glycol, diéthylène glycol, glycérol, polyéthylèneglycol (PEG) de masse comprise entre 200 et 1000.

4.  Matériau colloïde conducteur de cations alcalins Li$^+$ selon l'une des revendications 1 à 3, **caractérisé en ce qu'**il comporte en outre un quatrième constituant (iv) formé par un sel inorganique MX soluble dans le solvant (ii), M$^+$ étant le même cation alcalin que celui utilisé lors de la neutralisation du polyacide (i) et X$^-$ un anion monovalent.

5.  Matériau colloïde conducteur de cations alcalins selon la revendication 4, **caractérisé en ce que** X$^-$ est un anion choisi parmi le groupe suivant : Cl$^-$, Bi$^-$, F$^-$, I$^-$, ClO$_4$$^-$ BF$_4$$^-$, CF$_3$SO$_3$$^-$.

6.  Application du matériau colloïde selon l'une des revendications précédentes à la réalisation de systèmes électrochromes.

**Revendications pour l'Etat contractant suivant : ES**

1.  Procédé d'obtention d'un matériau colloïde conducteur de cations lithium Li$^+$ comportant le mélangeage dans des proportions adéquates d'un ionomère (i) obtenu par neutralisation d'un polyacide au sens de Brönsted par un hydroxyde lithium LiOH, ledit ionomère (i) portant des groupes anioniques fixés à la chaine polymérique associés à des cations Li$^+$ et d'un solvant polaire (ii), capable de solubiliser ou de plastifier l'ionomère (i) et d'assurer une dissociation partielle des ions et paires d'ions et le transport des ions Li$^+$, **caractérisé en ce que** le polyacide est un acide polycarboxylique choisi parmi l'acide polyacrylique PAA, l'acide polyméthylacrylique PMMA et leurs copolymères avec motifs amines ou amides, **en ce que** le polyacide n'est neutralisé que partiellement avec un taux de neutralisation $\alpha$ inférieur au taux de neutralisation $\alpha_m$ au-delà duquel il se produit une séparation de phase et étant compris entre 10 et 20% et **en ce qu'**il comporte également une polybase (iii) choisie parmi le groupe suivant : polyethers par exemple polyoxyéthylène PEO, polyamides par exemple polyvinylpyrrolidone PVP, polyacrylamides, polyimides par exemple polyéthylènimide PEI, polyéthylèneglycols PEG de masse supérieure à 1000 et inférieure à 10 000.

2. Procédé d'obtention d'un matériau colloïde conducteur de cations alcalins selon la revendication 1, **caractérisé en ce que** le solvant polaire (ii) est formé d'un ou d'une combinaison de solvants dipolaires aprotiques suivants : formamide, acétamide, N-méthylformamide (NMF), N-méthylacétamide (NMA), N-N-diméthylformamide (DMF), N-N-diméthylacétarnide (DMA), acétonitrile, diméthylsulfoxide (DMSO), sulfolane, carbonate de propylène (CP), carbonate d'éthylène glycol (CEG), héxaméthylphosphoramide (HMPA), héxaméthylphosphotriamide (HMPT), pyrrolidone.

3. Procédé d'obtention d'un matériau colloïde conducteur de cations alcalins selon la revendication 1, **caractérisé en ce que** le solvant polaire (ii) est un solvant polaire donneur de protons choisi parmi le groupe suivant : éthylèneglycol (EG), propylène glycol, diéthylène glycol, glycérol, polyéthylèneglycol (PEG) de masse comprise entre 200 et 1000.

4. Procédé d'obtention d'un matériau colloïde conducteur de cations alcalins selon l'une des revendications 1 à 3, **caractérisé en ce qu'**il comporte en outre un quatrième constituant (iv) formé par un sel inorganique MX soluble dans le solvant (ii), M$^+$ étant le même cation alcalin que celui utilisé lors de la neutralisation du polyacide (i) et X$^-$ un anion monovalent.

5. Procédé d'obtention d'un matériau colloïde conducteur de cations alcalins selon la revendication 4, **caractérisé en ce** que X$^-$ est un anion choisi parmi le groupe suivant : Cl$^-$, Bi$^-$, F$^-$, I$^-$, ClO$_4^-$, BF$_4^-$, CF$_3$SO$_3^-$.

6. Application du matériau colloïde selon l'une des revendications précédentes à la réalisation de systèmes électrochromes.


**Patentansprüche**

**Patentansprüche für folgende Vertragsstaaten : AT, BE, CH, DE, FR, GB, IT, LI, LU, SE**

1. Lithiumkationen (Li$^+$) leitendes kolloides Material, enthaltend das Gemisch aus einem Ionomer (I), das durch Neutralisation einer Brönsted-Polysäure mit Lithiumhydroxid (LiOH) hergestellt werden kann, um an der Polymerkette sitzende anionische Gruppen zu tragen, die mit alkalischen Li$^+$-Kationen verbunden sind, und einem polaren Lösungsmittel (II), welches das Ionomer (I) solubilisieren oder plastifizieren und für eine partielle Dissoziation der Ionen und Ionenpaare und den Transport der Li$^+$-Kationen sorgen kann, **dadurch gekennzeichnet, daß** die Polysäure eine aus Polyacrylsäure (PAA) und Polymethacrylsäure (PMMA) und ihren Copolymeren mit Amin- oder Amidresten ausgewählte Polycarbonsäure ist, **daß** die Polysäure nur teilweise mit einem Neutralisationsgrad $\alpha$ neutralisiert ist, der niedriger als der Neutralisationsgrd $\alpha_m$ ist, ab welchem eine Phasentrennung stattfindet, und 10 bis 20 % beträgt **und daß** es auch eine im Lösungsmittel (II) lösliche Brönsted-Polybase (III) enthält, die mit dem Ionomer (I) keinen festen Niederschlag ergibt, zur Dissoziation der Ionen und Ionenpaare beiträgt, indem sie die Li$^+$-Ionen solvatisiert, und aus der Gruppe ausgewählt ist, die aus Polyethern, beispielsweise Polyethylenoxid (PEOX), Polyamiden, beispielsweise Polyvinylpyrrolidon (PVP), Polyacrylamiden, Polyimiden, beispielsweise Polyethylenimid (PEI) und Polyethylenglykolen (PEG) mit einer Molmasse zwischen 1000 und 10000 besteht.

2. Li$^+$-Kationen leitendes kolloides Material nach Anspruch 1, **dadurch gekennzeichnet, daß** das polare Lösungsmittel (II) aus einem der aprotischen dipolaren Lösungsmittel Formamid, Acetamid, N-Methylformamid (NMF), N-Methylacetamid (NMA), N,N-Dimethylformamid (DMF), N,N-Dimethylacetamid (DMA), Acetonitril, Dimethylsulfoxid (DMSO), Sulfolan, Propylencarbonat (CP), Ethylenglykolcarbonat (CEG), Hexamethylphosphorsäureamid (HMPA), Hexamethylphosphorsäuretriamid (HMPT) und Pyrrolidon oder einer Kombination davon besteht.

3. Li$^+$-Kationen leitendes kolloides Material nach Anspruch 1, **dadurch gekennzeichnet, daß** das polare Lösungsmittel (II) ein aus der aus Ethylenglykol (EG), Propylenglykol, Diethylenglykol, Glycerin, Polyethylenglykol (PEG) mit einer Molmasse zwischen 200 und 1000 bestehenden Gruppe ausgewähltes polares Protonendonator-Lösungsmittel ist.

4. Alkalische Li$^+$-Kationen leitendes kolloides Material nach einem der Ansprüche 1 bis 3, **dadurch gekennzeichnet, daß** es außerdem einen vierten Bestandteil (IV) enthält, der aus einem in dem Lösungsmittel (II) löslichen anorganischen Salz MX besteht, wobei M$^+$ dasselbe Alkalikation wie das bei der Neutralisation der Polysäure (I) verwendete und X$^-$ ein einwertiges Anion ist.

5. Alkalikationen leitendes kolloides Material nach Anspruch 4, **dadurch gekennzeichnet, daß** X$^-$ ein aus der aus Cl$^-$, Bi$^-$, F$^-$, I$^-$, ClO$_4^-$, BF$_4^-$ und CF$_3$SO$_3^-$ bestehenden Gruppe ausgewähltes Anion ist.

6. Verwendung des kolloiden Materials nach einem der vorhergehenden Ansprüche zur Herstellung elektrochromer Systeme.

## Patentansprüche für folgenden Vertragsstaat : ES

1. Verfahren zur Herstellung eines Lithiumkationen (Li$^+$) leitenden kolloiden Materials, enthaltend das Gemisch in angemessenen Anteilen aus einem Ionomer (I), das durch Neutralisation einer Brönsted-Polysäure mit Lithiumhydroxid (LioH) hergestellt wurde und das an der Polymerkette sitzende anionische Gruppen trägt, die mit Li$^+$-Kationen verbunden sind, und einem polaren Lösungsmittel (II), welches das Ionomer (I) solubilisieren oder plastifizieren und für eine partielle Dissoziation der Ionen und Ionenpaare und den Transport der Li$^+$-Kationen sorgen kann, **dadurch gekennzeichnet**, daß die Polysäure eine aus Polyacrylsäure (PAA) und Polymethacrylsäure (PMMA) und ihren Copolymeren mit Amin- oder Amidresten ausgewählte Polycarbonsäure ist, daß die Polysäure nur teilweise mit einem Neutralisationsgrad $\alpha$ neutralisiert ist, der niedriger als der Neutralisationsgrad $\alpha_m$ ist, ab welchem eine Phasentrennung stattfindet, und 10 bis 20 %, beträgt und daß es auch eine Polybase (III) enthält, die aus der Gruppe ausgewählt ist, die aus Polyethern, beispielsweise Polyethylenoxid (PEOX), Polyamiden, beispielsweise Polyvinylpyrrolidon (PVP), Polyacrylamiden, Polyimiden, beispielsweise Polyethylenimid (PEI) und Polyethylenglykolen (PEG) mit einer Molmasse zwischen 1000 und 10000 besteht.

2. Verfahren zur Herstellung Alkalikationen leitenden kolloiden Materials nach Anspruch 1, dadurch gekennzeichnet, daß das polare Lösungsmittel (II) aus einem der aprotischen dipolaren Lösungsmittel Formamid, Acetamid, N-Methylformamid (NMF), N-Methylacetamid (NMA), N,N-Dimethylformamid (DMF), N,N-Dimethylacetamid (DMA), Acetonitril, Dimethylsulfoxid (DMSO), Sulfolan, Propylencarbonat (CP), Ethylenglykolcarbonat (CEG), Hexamethylphosphorsäureamid (HMPA), Hexamethylphosphorsäuretriamid (HMPT) und Pyrrolidon oder einer Kombination davon besteht.

3. Verfahren zur Herstellung eines Alkalikationen leitenden kolloiden Materials nach Anspruch 1, dadurch gekennzeichnet, daß das polare Lösungsmittel (II) ein aus der aus Ethylenglykol (EG), Propylenglykol, Diethylenglykol, Glycerin, Polyethylenglykol (PEG) mit einer Molmasse zwischen 200 und 1000 bestehenden Gruppe ausgewähltes polares Protonendonator-Lösungsmittel ist.

4. Verfahren zur Herstellung eines Alkalikationen leitenden kolloiden Materials nach einem der Ansprüche 1 bis 3, dadurch gekennzeichnet, daß es außerdem einen vierten Bestandteil (IV) enthält, der aus einem in dem Lösungsmittel (II) löslichen anorganischen Salz MX besteht, wobei M$^+$ dasselbe Alkalikation wie das bei der Neutralisation der Polysäure (I) verwendete und X$^-$ ein einwertiges Anion ist.

5. Verfahren zur Herstellung eines Alkalikationen leitenden kolloiden Materials nach Anspruch 4, dadurch gekennzeichnet, daß X$^-$ ein aus der aus Cl$^-$, Bi$^-$, F$^-$, I$^-$, ClO$_4^-$, BF$_4$- und CF$_3$SO$_3^-$ bestehenden Gruppe ausgewähltes Anion ist.

6. Verwendung des kolloiden Materials nach einem der vorhergehenden Ansprüche zur Herstellung elektrochromer Systeme.

## Claims

## Claims for the following Contracting States : AT, BE, CH, DE, FR, GB, IT, LI, LU, SE

1. Colloidal material, conductive of lithium cations Li$^+$, comprising the mixture of an ionomer (i) capable of being produced by neutralization of a polyacid in the Brönsted sense by a lithium hydroxide LiOH in order to carry anionic groups fixed to the polymeric chain and associated with alkaline cations Li$^+$ and of a polar solvent (ii) capable of solubilizing or plasticizing the ionomer (i) and of assuring a partial dissociation of the ions and ion pairs and the transportation of $Li^+$ cations, characterized in that the polyacid is a polycarboxylic acid chosen from among polyacrylic acid PAA, polymethyl methacrylic acid PMMA and their copolymers with amine or amide motifs, in that the polyacid is neutralized only partially with a neutralization rate $\alpha$ less than the neutralization rate $\alpha_m$, beyond which a phase separation takes place and lying between 10 and 20%, and in that it comprises also a polybase (iii) in the Brönsted sense, soluble in the solvent (ii) and not giving a solid precipitate with the ionomer (i), contributing to the dissociation of the ions and ion pairs by solvating the $Li^+$ ions and chosen from among the following group: polyethers (for example polyoxyethylene PEO, polyamides for example polyvinyl pyrrolidone PVP, polyacrylamides, polyimides for example polyethylenimide PEI, polyethylene glycols PEG of mass greater than 1,000 and less than 10,000.

2. Colloidal material conductive of $Li^+$ cations according to Claim 1, characterized in that the polar solvent (ii) is formed of one or a combination of the following aprotic dipolar solvents: formamide, acetamide, N-methylformamide (NMF), N-methylacetamide (NMA), N-N-dimethylformamide (DMF), N-N-dimethylacetamide (DMA), acetonitrile, dimethylsulphoxide (DMSO), sulpholane, propylene carbonate (PC), ethylene glycol carbonate (EGC), hexamethylphosphoramide (HMPA), hexamethylphosphotriamide (HMPT), pyrrolidone.

3. Colloidal material conductive of $Li^+$ cations according to Claim 1, characterized in that the polar solvent (ii) is a proton-donor polar solvent chosen from among the following group: ethylene glycol (EG), propylene glycol, diethylene glycol, glycerol, polyethylene glycol (PEG), of mass between 200 and 1,000.

4. Colloidal material conductive of alkaline cations $Li^+$ according to one of Claims 1 to 3, characterized in that it comprises, in addition, a fourth constituent (iv) formed of an inorganic salt MX soluble in the solvent (ii), $M^+$ being the same alkaline cation as that used in the neutralization of the polyacid (i) and $X^-$ a monovalent anion.

5. Colloidal material conductive of alkaline cations according to Claim 4, characterized in that $X^-$ is an anion chosen from among the following group: $Cl^-$, $Bi^-$, $F^-$, $I^-$, $ClO_4^-$, $BF_4^-$, $CF_3SO_3^-$.

6. Application of the colloidal material according to one of the preceding Claims to the production of electrochromic systems.

**Claims for the following Contracting State : ES**

1. 1. Process for the production of a colloidal material conductive of lithium cations $Li^+$, comprising the mixing, in adequate proportions, of an ionomer (i) produced by neutralization of a polyacid in the Brönsted sense by a lithium hydroxide LiOH, said ionomer (i) carrying anionic groups fixed to the polymeric chain and associated with $Li^+$ cations and of a polar solvent (ii), capable of solubilizing or plasticizing the ionomer (i) and of assuring a partial dissociation of the ions and ion pairs and the transportation of the $Li^+$ ions, characterized in that the polyacid is a polycarboxylic acid chosen from among polyacrylic acid PAA, polymethyl methacrylic acid PMMA and their copolymers with amine or amide motifs, in that the polyacid is neutralized only partially with a neutralization rate $\alpha$ less than the neutralization rate $\alpha_m$, beyond which a phase separation takes place and being comprised between 10 and 20%, and in that it comprises also a polybase (iii) chosen from among the following group: polyethers for example polyoxyethylene PEO, polyamides for example polyvinyl pyrrolidone PVP, polyacrylamides, polyimides for example polyethyleneimide PEI, polyethylene glycols PEG of mass exceeding 1,000 and less than 10,000.

2. Process for the production of a colloidal material conductive of alkaline cations according to Claim 1, characterized in that the polar solvent (ii) is formed of one or a combination of the following aprotic dipolar solvents: formamide, acetamide, N-methylformamide (NMF), N-methylacetamide (NMA), N-N-dimethylformamide (DMF), N-N-dimethylacetamide (DMA), acetronitrile, dimethylsulphoxide (DMSO), sulpholane, propylene carbonate (PC), ethylene glycol carbonate (EGC), hexamethylphosphoramide (HMPA), hexamethylphosphotriamide (HMPT), pyrrolidone.

3. Process for the production of a colloidal material conductive of alkaline cations according to Claim 1, characterized in that the polar solvent (ii) is a proton-donor polar solvent chosen from among the following group: ethylene glycol (EG), propylene glycol, diethylene glycol, glycerol, polyethylene glycol (PEG), of mass between 200 and 1,000.

4. Process for the production of a colloidal material conductive of alkaline cations according to one of Claims 1 to 3, characterized in that it comprises, in addition, a fourth constituent (iv) formed of an inorganic salt MX soluble in the solvent (ii), $M^+$ being the same alkaline cation as that used in the neutralization of the polyacid (i) and $X^-$ a monovalent anion.

5. Process for the production of a colloidal material conductive of alkaline cations according to Claim 4, characterized in that $X^-$ is an anion chosen from among the following group: $Cl^-$, $Bi^-$, $F^-$, $I^-$, $ClO_4^-$, $BF_4^-$, $CF_3SO_3^-$.

6. Application of the colloidal material according to one of the preceding Claims to the production of electrochromic systems.